# EUROPÄISCHE PATENTANMELDUNG

(11) **EP 4 461 121 A1**
(43) Veröffentlichungstag der Anmeldung: **13.11.2024**
(21) Anmeldenummer: 24161931.1
(22) Anmeldetag: 07.03.2024
(51) Int. Cl.: A01D 43/08, A01D 43/10

(54) **SELBSTFAHRENDER FELDHÄCKSLER**

(30) Priorität: 08.05.2023 DE 102023111955
(71) Anmelder: CLAAS Saulgau GmbH, 88340 Bad Saulgau (DE)
(72) Erfinder: Löffler, Niklas, 88367 Hohentengen (DE); Deufel, Tobias, 88605 Meßkirch-Menningen (DE)
(74) Vertreter: Budach, Steffen

(57) **Zusammenfassung**

Selbstfahrender Feldhäcksler (1), umfassend eine Häckselvorrichtung (6) und eine Nachbeschleunigungsvorrichtung (12) als Arbeitsorgane, welche in Förderrichtung (FR) eines Ernteguts gesehen aufsteigend hintereinander angeordnet und durch einen Förderschacht (10), welcher durch eine untere Wand (14) und eine obere Wand (15) begrenzt ist, miteinander verbunden sind, sowie einen Grasschacht (16) und/oder eine ein Paar Walzen (28a, 28b) umfassenden Nachbearbeitungsvorrichtung (11), die im Austausch miteinander zwischen der Häckselvorrichtung (6) und der Nachbeschleunigungsvorrichtung (12) in Förderrichtung (FR) des Ernteguts gesehen stromabwärts des Förderschachts (10) positionierbar sind, wobei die untere Wand (14) im Bereich der Arbeitsorgane einen abschnittsweise gekrümmten Verlauf aufweist, wobei die untere Wand (14) einen Krümmungsradius aufweist, so dass sowohl im Austrittsbereich (17, 24, 26) des vorgeordneten Arbeitsorgans (6) als auch im Eintrittsbereich (25, 26) des nachgeordneten Arbeitsorgans (12) ein vom vorgeordneten Arbeitsorgan (6) beschleunigter Gutstrom tangential eintritt bzw. austritt.

## Beschreibung

Die vorliegende Erfindung betrifft einen selbstfahrenden Feldhäcksler gemäß dem Oberbegriff des Anspruches 1.

Ein selbstfahrender Feldhäcksler der eingangs genannten Art ist aus der DE 39 33 779 A1 bekannt. Ein von einer Häckselvorrichtung erzeugter Erntegutstrom wird an einen trichterförmigen Förderschacht abgegeben, durch welchen das Erntegut zur optionalen Nachbearbeitungsvorrichtung, auch als Konditioniereinrichtung oder Korncracker bezeichnet, gelangt. Von dieser wird das Erntegut an ein Nachbeschleunigungsvorrichtung abgegeben, welche das Erntegut für eine zum Überladen auf einen zum Feldhäcksler beabstandeten Transportwagen hinreichende Geschwindigkeit beschleunigt. Der Förderschacht weist eine untere Wand und eine obere Wand auf, die einander gegenüberliegend angeordnet sind. Die untere Wand, die sich zwischen der Häckselvorrichtung und der Nachbeschleunigungsvorrichtung erstreckt, weist einen durchgehend geraden Verlauf auf. Die obere Wand, welche sich zwischen der Häckselvorrichtung und der optionalen Nachbearbeitungsvorrichtung erstreckt, weist ebenfalls einen geraden Verlauf auf, wobei diese in Förderrichtung geneigt ist, sodass sich der Förderschacht signifikant verjüngt. Das von der Häckselvorrichtung an die Nachbearbeitungsvorrichtung abgegebene Erntegut wird durch die untere Wand auf Höhe des Spaltes, dem sogenannten Crackerspalt, zwischen den beiden Walzen in die Nachbearbeitungsvorrichtung eingeleitet.

Der Energiebedarf von Feldhäckslern wird unter anderem durch die Effizienz der Gutförderung beeinflusst. Somit ist es unter Umweltaspekten und aus Gründen der Kostenoptimierung ein Bestreben, den Energiebedarf des Feldhäckslers durch Optimierungsmaßnahmen im Bereich des Gutflusses zu reduzieren.

Ausgehend von dem vorstehend genannten Stand der Technik ist es demnach die Aufgabe der vorliegenden Erfindung, einen selbstfahrenden Feldhäcksler der eingangs genannten Art weiterzubilden, welcher sich durch eine energetisch verbesserte Förderung des Erntegutes auszeichnet.

Diese Aufgabe wird erfindungsgemäß durch die Merkmale des unabhängigen Patentanspruchs 1 gelöst, wobei vorteilhafte Weiterbildungen der erfindungsgemäßen Erntemaschine Gegenstand der entsprechenden abhängigen Patentansprüche 2 bis 9 sind.

Gemäß Anspruch 1 wird ein selbstfahrender Feldhäcksler vorgeschlagen, der eine Häckselvorrichtung und eine Nachbeschleunigungsvorrichtung als Arbeitsorgane, welche in Förderrichtung eines Ernteguts gesehen aufsteigend hintereinander angeordnet und durch einen Förderschacht, welcher durch eine untere Wand und eine obere Wand begrenzt ist, miteinander verbunden sind, sowie mit einem Grasschacht und/oder einer ein Paar Walzen umfassenden Nachbearbeitungsvorrichtung, die im Austausch miteinander zwischen der Häckselvorrichtung und der Nachbeschleunigungsvorrichtung in Förderrichtung des Ernteguts gesehen stromabwärts des Förderschachts positionierbar sind, umfasst. Erfindungsgemäß ist vorgesehen, dass die untere Wand im Bereich der Arbeitsorgane einen abschnittsweise gekrümmten Verlauf aufweist, wobei die untere Wand einen Krümmungsradius aufweist, so dass sowohl im Austrittsbereich des vorgeordneten Arbeitsorgans als auch im Eintrittsbereich des nachgeordneten Arbeitsorgans ein vom vorgeordneten Arbeitsorgan beschleunigter Gutstrom tangential eintritt bzw. austritt.

Wesentlich ist dabei, dass durch das tangentiale Austreten aus dem Austrittsbereich des vorgeordneten Arbeitsorgans und das tangentiale Eintreten in den Eintrittsbereich des nachgeordneten Arbeitsorgans eine reibungs- und strömungsoptimierte Gutförderung erreicht wird, wodurch der Energiebedarf für das Fördern des Erntegutes entlang des Förderschachts, insbesondere der Nachbeschleunigungsvorrichtung reduziert wird. Der Verlauf des geförderten Erntegut ist gegenüber dem Stand der Technik flacher. Das entlang des Förderschachts geförderte Erntegut erfährt keine Ablenkung oder Umlenkung durch eine in den Gutstrom hineinragende Kante oder einen in den Gutstrom hineinragenden Vorsprung im Stoßbereich zwischen dem Austrittsbereich des vorgeordneten Arbeitsorgans und dem Eintrittsbereich des nachgeordneten Arbeitsorgans. Als Stoßbereich wird das Aufeinandertreffen vom Austrittsbereich des vorgeordneten Arbeitsorgans und dem Eintrittsbereich des nachgeordneten Arbeitsorgans bezeichnet, die sich in Förderrichtung gesehen aneinander anschließen. Der von der Kontur insbesondere der unteren Wand aufgeprägte Verlauf des den Förderschacht durchströmenden Gutstroms erfährt im Stoßbereichen keine Änderung. Der tangential ausströmende Gutstrom des Austrittsbereiches tritt ebenso tangential in den Eintrittsbereich ein.

Durch die erfindungsgemäße Ausgestaltung der unteren Wand wird auf Gutflussabweichungen, die bei einem Wechsel vom Grasschacht bei der Grasernte auf die Nachbearbeitungsvorrichtung bei der Maisernte auftreten, und der damit verbundenen Veränderung im Energiebedarf zur Gutstromförderung reagiert, um diese auf strömungstechnische Einflüsse zurückzuführende Veränderung zu minimieren.

Insbesondere kann die untere Wand einen ersten gekrümmten Wandabschnitt, welcher sich zwischen der Häckselvorrichtung und der Nachbeschleunigungsvorrichtung erstreckt, und einen zweiten gekrümmten Wandabschnitt, welcher im Bereich der Nachbeschleunigungsvorrichtung angeordnet ist, aufweisen. Bei einem Einsatz der Nachbearbeitungsvorrichtung, welche den Förderschacht zwischen der Häckselvorrichtung und der Nachbeschleunigungsvorrichtung unterbricht, endet der erste gekrümmte Wandabschnitt vor der Nachbearbeitungsvorrichtung. Bei einem Einsatz des Grasschachtes bildet der Grasschacht eine Verlängerung des ersten gekrümmten Wandabschnitts bis zur Nachbeschleunigungsvorrichtung. Die gekrümmte Ausführung des zweiten Wandabschnitts hat den Vorteil, dass die Nachbeschleunigungsvorrichtung radial weiter in den Gutfluss hineinragen kann. Die Beschickung von über den Umfang der Nachbeschleunigungsvorrichtung verteilt angeordneten Förderelementen mit Erntegut bzw. die Gutannahme durch die Förderelemente wird dadurch verbessert.

Gemäß einer Weiterbildung kann der erste Wandabschnitt der unteren Wand bei einer Verlängerung durch den Einsatz des Grasschachts in Richtung der oberen Wand stärker zustellbar oder zugestellt sein als bei der Verwendung der Nachbearbeitungsvorrichtung. Die stärkere Zustellung des ersten Wandabschnitts bewirkt eine Verbesserung der Beschickung der Förderelemente der Nachbeschleunigungsvorrichtung, insbesondere bei der Grasernte oder der Ernte vergleichbaren Erntegutes. Bei der Verwendung der optionalen Nachbearbeitungsvorrichtung anstelle des Grasschachts kann durch die geringere Zustellung des ersten Wandabschnitts Einfluss auf den Auftreffbereich des Erntegutes zwischen den Walzen der Nachbearbeitungsvorrichtung genommen werden.

Hierbei kann der erste Wandabschnitt einen Austrittsbereich mit einer tangential verlaufenden Auslaufebene aufweisen, welche im Bereich der der unteren Wand zugewandten Walze der Nachbearbeitungsvorrichtung liegt. Die tangential verlaufende Auslaufebene bezeichnet einen Abschnitt unmittelbar vor der Stoßkante, innerhalb dessen der Gutstrom in Förderrichtung keine Richtungsbeeinflussung erfährt. Die tangential verlaufende Auslaufebene liegt dabei auf einer Höhe oberhalb der Drehachse und unterhalb des Hüllkreises dieser Walze. Die Nachbearbeitungsvorrichtung kann von dem ersten Wandabschnitt verstärkt im Bereich der unteren Walze mit Erntegut beschickt werden, sodass der sogenannte Crackerspalt sich auch bei dickeren Gutmatten mittiger im Gutstrom befindet. Ein weiterer Vorteil besteht darin, dass nach dem Verlassen der Nachbearbeitungsvorrichtung das Erntegut mit reduziertem Wandkontakt gefördert wird, wodurch ein weiterer Beitrag zur energieeffizienteren Förderung geleistet wird.

Bevorzugt kann der zweite Wandabschnitt gegenüber dem ersten Wandabschnitt, bezogen auf die Förderrichtung im Förderschacht gesehen, nach außen versetzt angeordnet sein. Hierbei ist der Abstand des ersten Wandabschnitts zur gegenüberliegenden oberen Wand des Förderschachts geringer als der des zweiten Wandabschnitts. Diese Ausführung kann bei einem Einsatz des Grasschachtes vorgesehen sein, da sich durch die zurückversetzte Anordnung zwischen dem ersten Wandabschnitt und dem zweiten Wandabschnitt eine Stufe ausbildet. Unmittelbar im Anschluss an die tangential verlaufende Auslaufebene des ersten Wandabschnitts folgt eine sprunghafte Aufweitung des Eintrittsbereiches durch den zurückversetzt angeordneten zweiten Wandabschnitt. Aufgrund dieser Förderschachtgeometrie kann das durch die Häckselvorrichtung beschleunigte Erntegut verbessert den Förderelementen der Nachbeschleunigungsvorrichtung zugeführt werden. Die Gutannahme und Gutbeschleunigung kann dadurch verbessert werden. Die sich ausbildende Stufe erstreckt sich zumindest abschnittsweise über die Breite des Grasschachtes.

Insbesondere kann der untere Wandabschnitt eine reibungsoptimierte Oberfläche aufweisen. Dabei kann zusätzlich zur reibungsoptimierten Gestaltung durch den gekrümmten Verlauf des unteren Wandabschnitts eine Oberflächenbeschaffenheit des unteren Wandabschnitts vorgesehen sein, die sich durch eine geringe Haftreibung und zugleich eine hohe Verschleißresistenz auszeichnet.

Bevorzugt kann der axiale Abstand zwischen oberer Wand und unterer Wand des Förderschachts in Förderrichtung sich im Wesentlichen gleichmäßig verjüngend ausgeführt sein. Durch die im Wesentlichen symmetrische Verjüngung des gekrümmt verlaufenden Förderschachts wird die Guteinschnürung über den Förderweg innerhalb des Feldhäckslers zwischen Häckseltrommel und Drehkranz harmonisiert. Auch diese Maßnahme trägt zum energieeffizienteren Betrieb des Feldhäckslers bei.

Gemäß einer Weiterbildung kann die Nachbearbeitungsvorrichtung bezogen auf eine Mittellängsachse des Förderschachtes eine geneigte Anordnung aufweisen, wobei eine gedachte, Drehachsen der Walzen verbindende Gerade um einen Winkel ungleich 90° zur Mittellängsachse geneigt ist.

Hierbei ist der Winkel bevorzugt derart gewählt, dass die der oberen Wand zugewandte Walze gegenüber der der unteren Wand zugewandten Walze stromabwärts angeordnet ist.

Diese im Uhrzeigersinn gegenüber der Mittellängsachse des Förderschachtes geneigte Anordnung der Nachbearbeitungsvorrichtung bewirkt, dass das Erntegut verstärkt in Richtung des zweiten Wandabschnitts der unteren Wand gefördert wird. Hierdurch kann der Vorgang der Nachbeschleunigung durch die Nachbeschleunigungsvorrichtung begünstigt werden.

Die vorliegende Erfindung wird nachstehend anhand eines in den Zeichnungen dargestellten Ausführungsbeispieles näher erläutert.

Es zeigen:
- Fig. 1: exemplarisch eine schematische Darstellung eines selbstfahrenden Feldhäckslers in Seitenansicht;
- Fig. 2: exemplarisch eine schematische Darstellung eines Förderschachts des Feldhäckslers gemäß Fig. 1 mit einem Grasschacht; und
- Fig. 3: exemplarisch eine schematische Darstellung eines Förderschachts des Feldhäckslers gemäß Fig. 1 mit einer Nachbearbeitungsvorrichtung.

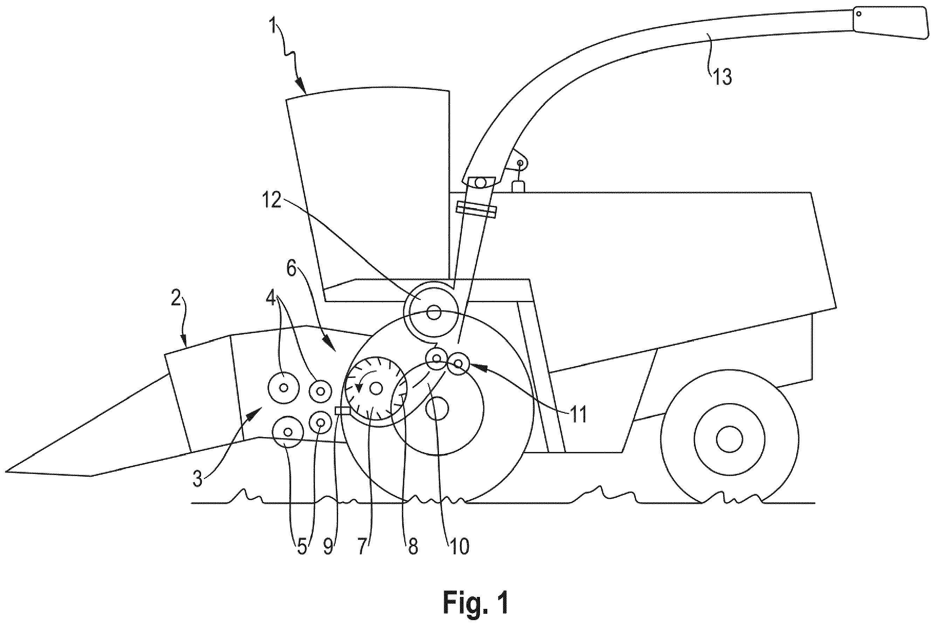

In Fig. 1 ist exemplarisch eine schematische Darstellung eines selbstfahrenden Feldhäckslers 1 in Seitenansicht abgebildet, an welchem im frontseitigen Bereich zur Aufnahme von auf dem Boden befindlichen Ernteguts ein Vorsatzgerät 2 angeordnet ist.

Das Vorsatzgerät 2 variiert in Abhängigkeit von der zu erntenden bzw. aufzunehmenden Erntegutart. Das Vorsatzgerät 2 nimmt das Erntegut vom Feld auf und fördert es einem Einzugsorgan 3 zu, die im dargestellten Ausführungsbeispiel aus einer Walzengruppe mit oberen und unteren Einzugswalzen 4, 5 besteht. Die Einzugswalzen 4, 5 des Einzugsorgans 3 üben eine Presskraft auf das aufgenommene Erntegut aus. Das Einzugsorgan 3 fördert das zu einer Erntegutmatte verdichtete Erntegut einer Häckselvorrichtung 6 zu, welche eine rotierend angetriebene Häckseltrommel 7 mit über deren Umfang verteilt angeordneten Häckselmessern 8 aufweist. Die Häckselmesser 8 schneiden die von dem Einzugsorgan 3 zugeführte Erntegutmatte an einer Gegenschneide 9. Das geschnittene bzw. gehäckselte Erntegut gelangt durch die Rotationsbewegung der Häckseltrommel 7 in einen nachgeordneten Förderkanal 10, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten, rotierend angetriebenen Nachbeschleunigungsorgan 12 zusätzlich beschleunigt durch eine verstellbare Überladeeinrichtung 13 in ein mitgeführtes Transportfahrzeug gefördert wird. Die optionale Nachbearbeitungsvorrichtung 11 kann wahlweise aus dem Gutflussweg ausgeschwenkt oder vollständig entfernt werden. Die Überladeeinrichtung 13 ist um eine vertikal verlaufende Achse drehbar, beispielsweise mittels eines Drehkranzes. Zusätzlich und unabhängig davon ist die Überladeeinrichtung 13 um eine horizontal verlaufende Achse schwenkbar. Am freien Ende der Überladeeinrichtung 13 kann eine sogenannte Auswurfklappe angeordnet sein, welche gegenüber der Überladeeinrichtung 13 um eine horizontal verlaufende Achse schwenkbar ist.

Die Nachbearbeitungsvorrichtung 11 kommt insbesondere bei der Maisernte zum Einsatz und dient dem Aufbereiten der Maiskörner. Bei der Grasernte hingegen entfällt der Einsatz der Nachbearbeitungsvorrichtung 11. Anstelle der Nachbearbeitungsvorrichtung 11 ist ein Grasschacht im Förderkanal 10 angeordnet.

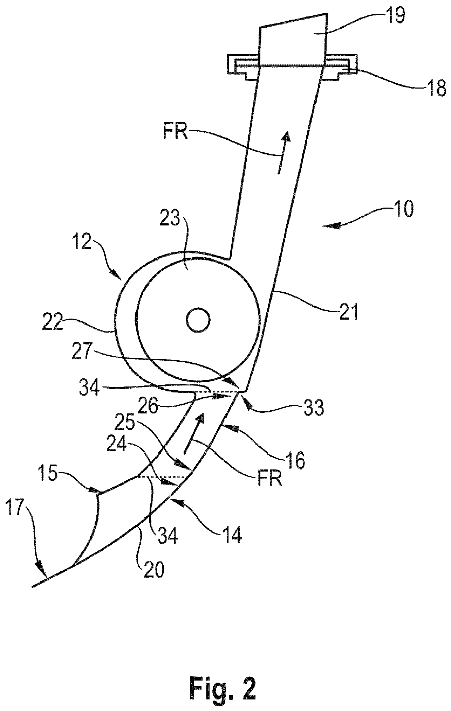

In Fig. 2 ist exemplarisch eine schematische Darstellung des Förderschachts 10 des Feldhäckslers 1 gemäß Fig. 1 mit einem Grasschacht 16 gezeigt. Die Häckselvorrichtung 6 und die Nachbeschleunigungsvorrichtung 12 bilden Arbeitsorgane des Feldhäckslers 1, welche in Förderrichtung FR des aufgenommenen und gehäckselten Ernteguts gesehen aufsteigend hintereinander angeordnet und durch den Förderschacht 10 miteinander verbunden sind. Aus Vereinfachungsgründen ist die Häckseltrommel 7 in Fig. 2 nicht dargestellt. Die Nachbeschleunigungsvorrichtung 12 umfasst einen in einem Gehäuse 22 angeordneten rotierenden Förderrotor 23.

Der Förderschacht 10 ist durch eine untere Wand 14 und eine obere Wand 15 begrenzt. Die untere Wand 14 und die obere Wand 15 sind durch im Wesentlichen senkrecht zu diesen angeordnete Seitenwände miteinander verbunden, sodass der Förderschacht 10 in Umfangsrichtung geschlossen ist. Die untere Wand 14 erstreckt sich ausgehend vom Austrittsbereich 17 der - in Fig. 2 nicht gezeigten - Häckseltrommel 7 in Richtung eines Drehkranzes 18 des Förderschachts 10. An den Förderschacht 10 schließt sich oberhalb des Drehkranzes 18 ein weiterer Schachtabschnitt 19 der Überladeeinrichtung 13 an, welcher um eine im Wesentlichen vertikale Achse schwenkbar angeordnet am Drehkranz 18 ist. Der Austrittsbereich 17 weist eine tangential verlaufende Annahmeebene auf, in welcher das von der Häckselvorrichtung 6 geförderte Erntegut in den Förderschacht 10 eintritt.

Die untere Wand 14 weist einen ersten gekrümmten Wandabschnitt 20 auf, welcher sich zwischen der Häckselvorrichtung 6 in Richtung der Nachbeschleunigungsvorrichtung 12 erstreckt. Weiter weist die untere Wand 14 einen zweiten gekrümmten Wandabschnitt 21 auf, welcher im Bereich der Nachbeschleunigungsvorrichtung 12 angeordnet ist. Der zweite gekrümmte Wandabschnitt 21 erstreckt sich zumindest über den Außendurchmesser des Förderrotors 23 der Nachbeschleunigungsvorrichtung 12.

Bei einem Einsatz des Grasschachtes 16 bildet der Grasschacht 16 eine Verlängerung des ersten gekrümmten Wandabschnitts 20 der unteren Wand 14, der oberen Wand 15 sowie der Seitenwände bis hin zur Nachbeschleunigungsvorrichtung 12. Das der Nachbeschleunigungsvorrichtung 12 zugewandte Ende der unteren Wand 14 weist einen Austrittsbereich 24 mit einer tangential verlaufenden Auslaufebene auf. An den Austrittsbereich 24 schließt sich im Stoßbereich 34 ein Eintrittsbereich 25 des Grasschachtes 16 mit einer tangential verlaufenden Einlaufebene unmittelbar an. Als Stoßbereich 34 wird das Aufeinandertreffen vom Austrittsbereich 24 des vorgeordneten Arbeitsorgans, hier der Häckselvorrichtung 6, und dem Eintrittsbereich 25 des nachgeordneten Arbeitsorgans, hier der Nachbeschleunigungsvorrichtung 12, bezeichnet, die sich in Förderrichtung FR gesehen aneinander anschließen. Die tangential verlaufende Auslaufebene bezeichnet einen Abschnitt des Austrittsbereiches 24 unmittelbar vor der Stoßkante 34, innerhalb dessen der Gutstrom in Förderrichtung FR keine Richtungsbeeinflussung erfährt. Die tangential verlaufende Einlaufebene bezeichnet einen Abschnitt des Eintrittsbereichs 25 des Grasschachts 16 unmittelbar hinter der Stoßkante 34, innerhalb dessen der Gutstrom in Förderrichtung FR keine Richtungsbeeinflussung erfährt.

Der Übergang zwischen dem Austrittsbereich 24 und dem Eintrittsbereich 25 verläuft tangential. An dem der Nachbeschleunigungsvorrichtung 12 zugewandten Ende des Grasschachtes 16 weist dieses einen Austrittsbereich 26 mit einer tangential verlaufenden Auslaufebene auf. Mit 27 ist ein Eintrittsbereich des zweiten Wandabschnitts 21 bezeichnet, in welchem das Erntegut in die Nachbeschleunigungsvorrichtung 12 tangential einströmt. Der Eintrittsbereich 27 schließt sich im Stoßbereich 34 unmittelbar an den Austrittsbereich 26 des Grasschachtes 16 an.

Der zweite Wandabschnitt 21 kann gegenüber dem ersten Wandabschnitt 20 senkrecht zur Förderrichtung FR zurückversetzt angeordnet sein. Hierzu ist der zweite Wandabschnitt 21 gegenüber dem ersten Wandabschnitt 20, bezogen auf die Förderrichtung FR im Förderschacht 10 gesehen, nach außen versetzt angeordnet. Hierbei ist der Abstand des ersten Wandabschnitts 20 zur gegenüberliegenden oberen Wand 15 geringer als der des zweiten Wandabschnitts 21. Diese Ausführung kann beim Einsatz des Grasschachtes 16 vorgesehen sein, da sich durch die zurückversetzte Anordnung zwischen dem ersten Wandabschnitt 20 und dem zweiten Wandabschnitt 21 eine Stufe 33 ausbildet. Der hierdurch erzielbare Effekt besteht darin, dass die Beschickung und Gutannahme durch von über den Umfang der Nachbeschleunigungsvorrichtung 12 verteilt angeordneten Förderelementen mit Erntegut bei der tangentialen Gutabgabe im Austrittsbereich 26 des Grasschachtes 16 mit seiner tangential verlaufenden Auslaufebene verbessert wird.

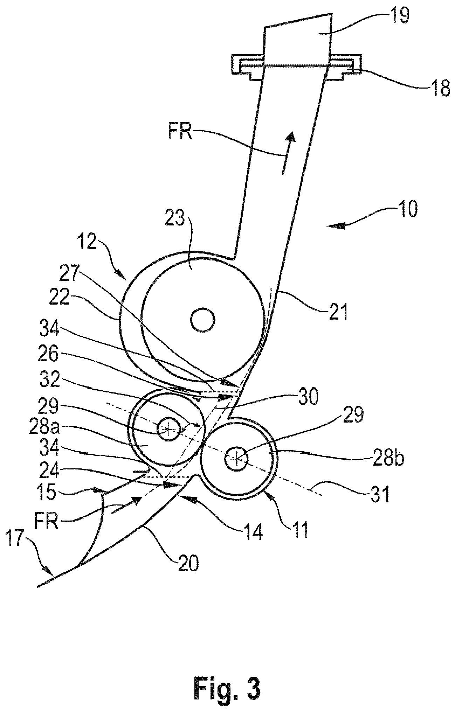

In Fig. 3 ist exemplarisch eine schematische Darstellung des Förderschachts 10 des Feldhäckslers 1 gemäß Fig. 1 mit einer Nachbearbeitungsvorrichtung 11 dargestellt. Anstelle des Grasschachtes 16 ist die Nachbearbeitungsvorrichtung 11 im Förderschacht 10 der Nachbeschleunigungsvorrichtung 12 vorgeordnet angeordnet. Die Nachbearbeitungsvorrichtung 11 weist ein Paar Walzen 28a, 28b auf, die um in einem Gehäuse achsparallel angeordnete Drehachsen 29 rotierend angetrieben sind. Die beiden Walzen 28a, 28b sind in ihrem Abstand zueinander verstellbar, wodurch sich unterschiedliche Spaltbreiten eines sogenannten Crackerspaltes einstellen lassen. Mittels der Einstellung der Spaltbreite respektive des axialen Abstands der beiden Walzen 28a, 28b zueinander wird Einfluss auf die Aufbereitung von Erntegut respektive das Aufschließen von Körnern genommen.

Gegenüber dem Aufbau gemäß Fig. 2 unterscheidet sich der in Fig. 3 dargestellte Aufbau nur durch die Anordnung der Nachbearbeitungsvorrichtung 11 im Förderschacht 10 anstelle des Grasschachtes 16. Von der Häckselvorrichtung 6 im Austrittsbereich 17 abgegebenes, tangential zugeführtes Erntegut strömt in Förderrichtung FR bis zum Austrittsbereich 24 des ersten Wandabschnitts 20, wo das Erntegut tangential in die Nachbearbeitungsvorrichtung 11 eintritt.

Die Nachbearbeitungsvorrichtung 11 weist bezogen auf eine Mittellängsachse 30 des Förderschachtes 10 eine geneigte Anordnung auf. Eine gedachte, die Drehachsen 29 der beiden Walzen 28a, 28b verbindende Gerade 31 ist um einen Winkel 32 ungleich 90°, insbesondere größer 90°, zur Mittellängsachse 30 geneigt. Der Winkel 32 ist bevorzugt derart gewählt, dass die der oberen Wand 15 zugewandte Walze 28a gegenüber der der unteren Wand 14 zugewandten Walze 28b, auch als untere Walze 28b bezeichnet, stromaufwärts angeordnet ist.

Die tangential verlaufende Auslaufebene des Austrittsbereichs 24 des ersten Wandabschnitts 14 liegt im Bereich der der unteren Wand 14 zugewandten Walze 28b der Nachbearbeitungsvorrichtung 11. Die tangential verlaufende Auslaufebene liegt dabei auf einer Höhe oberhalb der Drehachse 29 und unterhalb des Hüllkreises der Walze 28b. Die Nachbearbeitungsvorrichtung 11 kann von dem ersten Wandabschnitt 20 verstärkt im Bereich der unteren Walze 28b mit Erntegut beschickt werden, sodass der sogenannte Crackerspalt sich auch bei dickeren Gutmatten mittiger im Gutstrom befindet.

Die untere Wand 14 weist einen Krümmungsradius auf, so dass sowohl im Austrittsbereich 17, 24 des vorgeordneten Arbeitsorgans, d.h. der Häckselvorrichtung 6 und/oder der Nachbearbeitungsvorrichtung 11, als auch im Eintrittsbereich 25, 26 des nachgeordneten Arbeitsorgans, d.h. der Nachbearbeitungsvorrichtung 11 und/oder der Nachbeschleunigungsvorrichtung 12, ein vom vorgeordneten Arbeitsorgan beschleunigter Gutstrom tangential in einen jeweiligen Abschnitt des Förderschachts 10 eintritt bzw. austritt, d.h. tangential an diesen übergeben wird.

Dankbar ist weiterhin, dass der erste Wandabschnitt 20 der unteren Wand 14 bei einer Verlängerung durch den Grasschacht 16 in Richtung der oberen Wand 15 stärker zustellbar oder zugestellt ist als bei der Verwendung der Nachbearbeitungsvorrichtung 11 im Erntebetrieb.

Ein weiterer Aspekt ist, dass der Abstand zwischen der oberen Wand 15 und der unteren Wand 14 des Förderschachts 10 in Förderrichtung FR sich im Wesentlichen gleichmäßig verjüngend ausgeführt ist. Durch die im Wesentlichen symmetrische Verjüngung des Förderschachts 10 wird die Guteinschnürung über den Förderweg innerhalb des Feldhäckslers 1 zwischen der Häckseltrommel 7 zum Drehkranz 18 harmonisiert, was sich positiv auf die Energieeffizienz auswirkt.

### Bezugszeichenliste

| | | | |
|---|---|---|---|
| 1 | Selbstfahrender Feldhäcksler | 33 | Stufe |
| 2 | Vorsatzgerät | 34 | Stoßbereich |
| 3 | Einzugsorgan | FR | Förderrichtung |
| 4 | Einzugswalze | | |
| 5 | Einzugswalze | | |
| 6 | Häckselvorrichtung | | |
| 7 | Häckseltrommel | | |
| 8 | Häckselmesser | | |
| 9 | Gegenschneide | | |
| 10 | Förderschacht | | |
| 11 | Nachbearbeitungsvorrichtung | | |
| 12 | Nachbeschleunigungsvorrichtung | | |
| 13 | Überladeeinrichtung | | |
| 14 | Untere Wand | | |
| 15 | Obere Wand | | |
| 16 | Grasschacht | | |
| 17 | Austrittsbereich | | |
| 18 | Drehkranz | | |
| 19 | Schachtabschnitt | | |
| 20 | Erster Wandabschnitt | | |
| 21 | Zweiter Wandabschnitt | | |
| 22 | Gehäuse | | |
| 23 | Förderrotor | | |
| 24 | Austrittsbereich | | |
| 25 | Eintrittsbereich | | |
| 26 | Austrittsbereich | | |
| 27 | Eintrittsbereich | | |
| 28a | Walze | | |
| 28b | Walze | | |
| 29 | Drehachse | | |
| 30 | Mittellängsachse | | |
| 31 | Gerade | | |
| 32 | Winkel | | |

## Patentansprüche

1. Selbstfahrender Feldhäcksler (1), umfassend eine Häckselvorrichtung (6) und eine Nachbeschleunigungsvorrichtung (12) als Arbeitsorgane, welche in Förderrichtung (FR) eines Ernteguts gesehen aufsteigend hintereinander angeordnet und durch einen Förderschacht (10), welcher durch eine untere Wand (14) und eine obere Wand (15) begrenzt ist, miteinander verbunden sind, sowie einen Grasschacht (16) und/oder eine ein Paar Walzen (28a, 28b) umfassenden Nachbearbeitungsvorrichtung (11), die im Austausch miteinander zwischen der Häckselvorrichtung (6) und der Nachbeschleunigungsvorrichtung (12) in Förderrichtung (FR) des Ernteguts gesehen stromabwärts des Förderschachts (10) positionierbar sind, **dadurch gekennzeichnet, dass** die untere Wand (14) im Bereich der Arbeitsorgane einen abschnittsweise gekrümmten Verlauf aufweist, wobei die untere Wand (14) einen Krümmungsradius aufweist, so dass sowohl im Austrittsbereich (17, 24, 26) des vorgeordneten Arbeitsorgans (6) als auch im Eintrittsbereich (25, 27) des nachgeordneten Arbeitsorgans (12) ein vom vorgeordneten Arbeitsorgan (6) beschleunigter Gutstrom tangential eintritt bzw. austritt.

2. Feldhäcksler (1) nach Anspruch 1, **dadurch gekennzeichnet, dass** die untere Wand (14) einen ersten gekrümmten Wandabschnitt (20), welcher sich zwischen der Häckselvorrichtung (6) und der Nachbeschleunigungsvorrichtung (12) erstreckt, und einen zweiten gekrümmten Wandabschnitt (21), welcher im Bereich der Nachbeschleunigungsvorrichtung (12) angeordnet ist, aufweist.

3. Feldhäcksler (1) nach Anspruch 2, **dadurch gekennzeichnet, dass** der erste Wandabschnitt (20) der unteren Wand (14) bei einer Verlängerung durch den Grasschacht (16) in Richtung der oberen Wand (15) stärker zustellbar oder zugestellt ist als bei der Verwendung der Nachbearbeitungsvorrichtung (11).

4. Feldhäcksler (1) nach Anspruch 2 oder 3, **dadurch gekennzeichnet, dass** der erste Wandabschnitt (14) im Austrittsbereich (17, 24) eine tangential verlaufende Auslaufebene aufweist, welche im Bereich einer der unteren Wand (14) zugewandten Walze (28b) der Nachbearbeitungsvorrichtung (11) liegt.

5. Feldhäcksler (1) nach einem der vorangehenden Ansprüche, **dadurch gekennzeichnet, dass** der zweite Wandabschnitt (21) gegenüber dem ersten Wandabschnitt (20), bezogen auf die Förderrichtung (FR) im Förderschacht (10) gesehen, nach außen versetzt angeordnet ist.

6. Feldhäcksler (1) nach einem der vorangehenden Ansprüche, **dadurch gekennzeichnet, dass** der untere Wandabschnitt (20) eine reibungsoptimierte Oberfläche aufweist.

7. Feldhäcksler (1) nach einem der vorangehenden Ansprüche, **dadurch gekennzeichnet, dass** der axiale Abstand zwischen oberer Wand (15) und unterer Wand (14) des Förderschachts (10) in Förderrichtung (FR) sich im Wesentlichen gleichmäßig verjüngend ausgeführt ist.

8. Feldhäcksler (1) nach einem der vorangehenden Ansprüche, **dadurch gekennzeichnet, dass** die Nachbearbeitungsvorrichtung (11) bezogen auf eine Mittellängsachse (30) des Förderschachtes (10) eine geneigte Anordnung aufweist, wobei eine gedachte, Drehachsen (29) der Walzen (28a, 28b) verbindende Gerade (31) um einen Winkel (32) ungleich 90° zur Mittellängsachse (30) geneigt ist.

9. Feldhäcksler (1) nach Anspruch 8, **dadurch gekennzeichnet, dass** der Winkel (32) derart gewählt ist, dass die der oberen Wand (15) zugewandte Walze (28a) gegenüber der der unteren Wand (14) zugewandten Walze (28b) stromaufwärts angeordnet ist.
